# EUROPÄISCHE PATENTSCHRIFT

(11) **EP 0 912 854 B1**
(45) Veröffentlichungstag und Bekanntmachung des Hinweises auf die Patenterteilung: **19.12.2001**
(21) Anmeldenummer: 97936562.4
(22) Anmeldetag: 22.07.1997
(51) Int. Cl.: F16L 13/14

(54) **ROHRVERBINDUNG**
PIPE JOINT
RACCORDEMENT DE TUYAUX

(30) Priorität: 26.07.1996 DE 19631574
(43) Veröffentlichungstag der Anmeldung: 06.05.1999
(73) Patentinhaber: Mapress GmbH & Co. KG, 40764 Langenfeld (DE)
(72) Erfinder: FRANZEN, Rainer, D-47802 Krefeld (DE); FOERING, Herbert, D-42697 Solingen (DE)
(74) Vertreter: Meissner, Peter E., Dipl.-Ing.
(86) Internationale Anmeldenummer: DE9701581
(87) Internationale Veröffentlichungsnummer: WO9804862

(56) Entgegenhaltungen:
- EP-A- 0 378 882
- DE-A- 2 927 716
- GB-A- 2 205 138
- PATENT ABSTRACTS OF JAPAN vol. 5, no. 53 (M-63) [725] , 14.April 1981 & JP 56 009027 A (HITACHI), 29.Januar 1981,
- PATENT ABSTRACTS OF JAPAN vol. 010, no. 088 (M-467), 5.April 1986 & JP 60 227932 A (NIHON KOUKAN KEISHIYU KK), 13.November 1985,
- MANNESMANN PROSPEKT: "Mannesmann Pressfitting-System/Sanitär" MANNESMANN, Nr. 8/94, August 1994, LANGENFELD, XP002045959 in der Anmeldung erwähnt

## Beschreibung

Die Erfindung betrifft eine Rohrverbindung, bestehend aus einem Preßfitting und einem damit zu verbindenden Leitungsrohr gemäß dem Oberbegriff des Anspruches 1.

Eine Rohrverbindung der gattungsmäßigen Art mit einem die glattendigen Rohrenden umfassenden Fitting, dessen wulstförmig ausgebildete Enden je einen Dichtring aufnehmen, wobei mittels einer mit einer Betätigungsvorrichtung verbundenen auswechselbaren Haltevorrichtung mit gelenkig angeordneten Backen, das wulstförmig ausgebildete Ende und gleichzeitig der benachbarte zylindrische Bereich des Fittings zusammen mit dem Rohr plastisch und der eingeschlossene Dichtring elastisch verformt werden, ist bekannt (siehe Auszug aus dem Prospekt "Mannesmann Preßfitting GmbH", Ausgabe 8/1994). Die Dichtfunktion der Verbindung wird dadurch erreicht, daß durch plastische Verformung des wulstartig ausgebildeten Endes der Dichtring elastisch verformt wird und über einen bestimmten Teil des Querschnittsumfanges linienförmig an den ihn umgebenden Oberflächenbereichen des wulstartig ausgebildeten Endes des Fittings und des Rohres zur Anlage kommen. Zur Aufnahme der bei entsprechendem Innendruck auftretenden Längskräfte wird der dem wulstförmig ausgebildeten Ende benachbarte zylindrische Bereich des Fittings zusammen mit dem Rohr plastisch verformt. Bei der Verpressung werden das wulstförmig ausgebildete Ende als auch der benachbarte zylindrische Bereich mittels der Betätigungsvorrichtung gleichzeitig verformt. Auf Seite 13 und 14 des Prospektes wird darauf hingewiesen, daß für eine sichere Preßverbindung die richtige Einschieblänge für das Leitungsrohr von wesentlicher Bedeutung ist. Dabei wird unter "richtiger Einschieblänge" verstanden, daß vor dem Verpressen das Leitungsrohr unter leichtem Drehen und gleichzeitigem Drücken in axialer Richtung bis zum durch die sickenartige Vertiefung des Preßfittings sich ergebenden Anschlag eingeschoben werden soll. Eine zuvor angebrachte Markierung auf dem Leitungsrohr dient dabei als Kontrolle. Auf einer Baustelle erfolgt eine Leitungsrohrverlegung aus Gründen einer praktischen Arbeitsfolge aber nicht immer Schritt für Schritt, d. h. Abmessen, Abschneiden, Entgraten, Einschieben und Verpressen, sondern es werden gleichzeitig mehrere zu verbindende Leitungsrohrabschnitte vermessen und eingeschoben und abschließend alle Verbindungsstellen verpreßt. Bei dieser Arbeitsweise ist aber nicht auszuschließen, daß die Vermessung insbesondere bei engwinkligen Raumverhältnissen, nicht exakt war und das möglicherweise zu kurz abgeschnittene Leitungsrohr in einen oder sogar zwei Preßfittings nicht mehr voll eingeschoben werden kann oder nach Ausrichten der Leitung an einer Stelle das bereits eingeschobene Leitungsrohr aus dem Preßfitting ein Stück wieder herausgezogen wird. Da diese Rückverschiebung von außen nicht erkennbar ist, erfolgt trotzdem die Verpressung. Je nach Grad der Rückverschiebung kann eine solche nicht ordnungsgemäße Verpreßstelle infolge der Bewegung der Leitung später möglicherweise zu Undichtigkeiten, ggf. auch zum Lösen der Verbindung führen.

Aufgabe der Erfindung ist es, eine gattungsmäßige Rohrverbindung anzugeben, bei der das abgeschnittene und in den Preßfitting eingeschobene Leitungsrohr nur noch unter Gewaltanwendung zurückbewegt werden kann.

Diese Aufgabe wird mit den im kennzeichnenden Teil des Anspruches 1 angegebenen Merkmalen gelöst. Vorteilhafte Weiterbildungen sind Bestandteil von Unteransprüchen.

Kern der Erfindung ist die Anordnung eines die Rückbewegung des eingeschobenen Leitungsrohres verhinderndes Mittel im Einschubbereich des Preßfittings für das Leitungsrohr. Dieses Mittel kann ein aus einem elastischen Material bestehender Ring sein oder ein ringförmiges Federelement aus einem metallischen Werkstoff oder einem Verbundwerkstoff aus Metall und Kuststoff. Den Ring kann man auch als Klemmring bezeichnen. Vorteilhafterweise weist der Ring eine nach innen sich erstreckende Nase auf. Um den Einschub des Leitungsrohres nicht unnötig zu erschweren, ist die Nase in Einschubrichtung leicht geneigt. Bedingung in allen Fällen ist, daß die lichte Weite des Ringes, der Nase, des Federelementes im nichtbelasteten Zustand kleiner ist als der toleranzmäßig kleinste sich ergebende Außendurchmesser des eingeschobenen Leitungsrohres. Für die Anordnung des Ringes oder des ringförmigen Federelementes ist es vorteilhaft, wenn im zylindrischen Bereich des Preßfittings außerhalb des Einwirkbereiches der Preßbacke auf der Innenseite eine ringförmige Ausnehmung vorgesehen ist. Diese kann zwischen Ringwulst und Einwirkbereich der Preßbacke angeordnet sein.Vorzugsweise wird diese Ausnehmung durch eine nach außen sich erstreckende Sicke gebildet.

Bei Anordnung eines Klemmringes erfolgt die Montage in der Weise, daß im Zuge der Herstellung des Preßfittings die zuvor beschriebene Sicke mit angeformt wird. Zusätzlich zum Dichtring wird in durch die Sicke gebildete ringförmige Ausnehmung das Klemmittel eingelegt. Nach dem Ausmessen der erforderlichen Länge für das zu verbindende Leitungsrohr wird nach dem Entgraten der Stirnseite, der Endbereich des Leitungsrohres in den Preßfitting so lange eingeschoben, bis die Stirnseite fühlbar für den Monteur den Widerstand des Klemmittels überwunden und die Einschiebbegrenzung im Preßfitting erreicht hat. Dabei ergibt sich ein quasi Einrasteffekt. Eine ungewollte Rückbewegung des Leitungsrohres ist so gut wie ausgeschlossen, es sei denn, es wird gewaltsam dabei vorgegangen.

Vorteil der erfindungsgemäßen Anordnung ist, daß der Monteur mit dem quasi Einrasteffekt eine von Markierungen unabhängige Hilfe der Gewährleistung der erforderlichen Mindesteinschubtiefe an die Hand gegeben wird und eine versehentliche Rückbewegung des Leitungsrohres beispielsweise beim Ausrichten der Leitung nicht möglich ist.
Für den Fall, daß das Klemmittel im Bereich zwischen Einwirkbereich der Preßbacke und Anschlagsicke angeordnet wird, ergibt sich noch der Nebeneffekt, daß der kleine Spalt zwischen Innenseite Preßfitting und Außenseite des eingeschobenen Leitungsrohres weitgehend abgedichtet ist.

In der Zeichnung wird anhand eines Ausführungsbeispiels die erfindungsgemäße Rohrverbindung näher erläutert. Es zeigen:

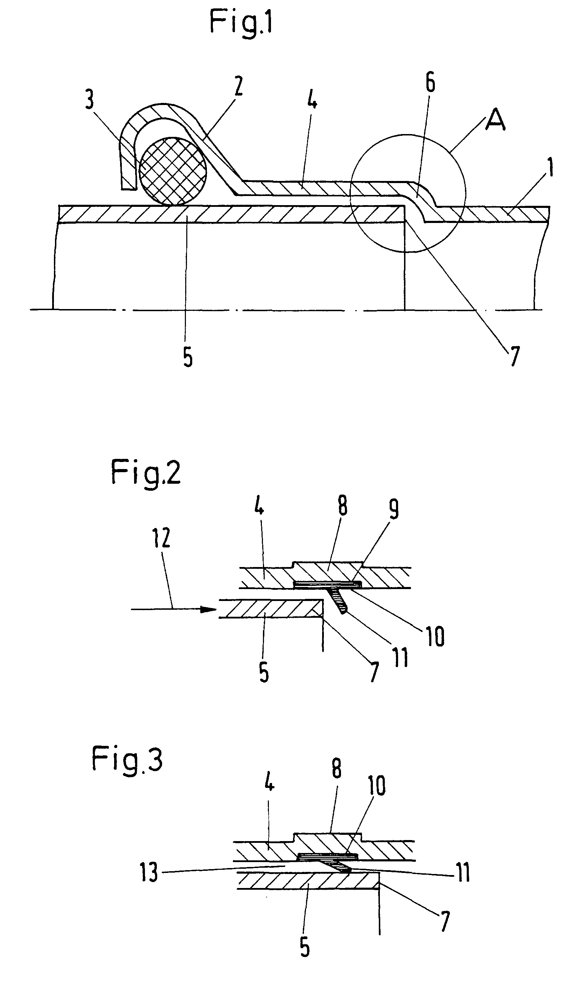

- Figur 1: einen halbseitigen Längsschnitt einer Rohrverbindung vor dem Verpressen

Figur 1 zeigt in einem halbseitigen Längsschnitt eine Rohrverbindung vor dem Verpressen. Die an sich bekannte Rohrverbindung besteht aus einem Preßfitting 1, der am offenen Ende einen ringförmigen Wulst 2 aufweist, in dem ein Dichtring 3 angeordnet ist. An den Wulst 2 schließt sich ein zylindrischer Abschnitt 4 an, der am Ende der Erstreckung dann übergeht in eine den Anschlag für das zu verbindende Leitungsrohr 5 bildende sickenförmige Vertiefung 6. Bei ordnungsgemäßem Einschub kommt die Stirnseite 7 des Leitungsrohres 5 an der sickenförmigen Vertiefung 6 des Preßfittings 1 zur Anlage.

In den Figuren 2 und 3 ist das Detail A in der Figur 1 in der Phase des Einschubes bzw. nach dem Einschub dargestellt. Erfindungsgemäß weist der zylindrische Bereich 4 des Preßfittings 1 eine nach außen sich erstreckende Sicke 8 auf, so daß auf der Innenseite des Preßfittings 1 eine zylindrische Ausnehmung 9 gebildet wird. In dieser Ausnehmung 9 wird ein Klemmittel in Form eines elastischen Ringes 10 angeordnet. Dieser Ring 10 weist eine in Einschubrichtung 12 etwas geneigte und nach innen sich erstreckende Nase 11 auf.

Figur 3 zeigt die Situation nach dem Einschieben des Leitungsrohres 5. Die Stirnseite 7 des Leitungsrohres 5 hat beim Einschieben die Nase 11 weggedrückt, so daß nunmehr der Ring 10 mit radialer Vorspannung auf das Leitungsrohr 5 einwirkt. Durch eine entsprechende Auswahl des Ringes 10 hinsichtlich seiner Gestaltung, Festigkeit und Federwirkung kann man es erreichen, daß die radiale auf die Mantelfläche 13 des Leitungsrohres 5 einwirkende Kraft so groß ist, daß eine Rückbewegung des Leitungsrohres 5 aus dem Preßfitting 1 so gut wie ausgeschlossen ist; es sei denn, die Verbindung wird gewaltsam auseinandergerissen.

## Patentansprüche

1. Rohrverbindung, bestehend aus einem Preßfitting (1), der mindestens einen im Querschnitt wulstartigen, einen Dichtring (3) aufnehmenden Abschnitt und einen daran anschließenden zylindrisch ausgebildeten Bereich (4) aufweist, der am Ende der Erstreckung mit einer einen Anschlag bildenden sickenförmigen Vertiefung (6) versehen ist, und aus einem Leitungsrohr (5), dessen glattendiger Endbereich nach dem Einschub in den Preßfitting am inneren Anschlag des Preßfittings zur Anlage kommt, bei welcher Rohrverbindung mittels eines den Preßfitting umfassenden mindestens zwei Preßbacken aufweisenden Preßwerkzeuges nach dem Schließen der Preßbacken eine unlösbare, dichte Rohrverbindung gebildet wird, wobei während des Verpressens die Preßbacken sowohl auf den Ringwulst einschließlich des darin eingelegten Dichtringes als auch auf den zylindrischen Bereich des Preßfittings einwirken,
**dadurch gekennzeichnet,**
**daß** im Einschubbereich des Preßfittings für das Leitungsrohr (5) außerhalb des Einwirkbereiches der Preßbacke ein weitgehend die axiale Rückbewegung des eingeschobenen Leitungsrohres verhinderndes Mittel (6;10)
angeordnet ist, dessen lichte Weite im nichtbelasteten Zustand kleiner ist als der toleranzmäßig kleinste sich ergebende Außendurchmesser des eingeschobenen Leitungsrohres.

2. Rohrverbindung nach Anspruch 1,
**dadurch gekennzeichnet,**
**daß** das Mittel ein aus einem elastischen Material bestehender Ring (10) ist.

3. Rohrverbindung nach Anspruch 2,
**dadurch gekennzeichnet,**
**daß** der Ring (10) eine nach innen sich erstreckende Nase (11) aufweist.

4. Rohrverbindung nach Anspruch 3,
**dadurch gekennzeichnet,**
**daß** die Nase in Einschubrichtung des Leitungsrohres leicht geneigt ist.

5. Rohrverbindung nach Anspruch 1,
**dadurch gekennzeichnet,**
**daß** das Mittel ein ringförmiges Federelement aus einem metallischen Werkstoff ist.

6. Rohrverbindung nach Anspruch 1,
**dadurch gekennzeichnet,**
**daß** das Mittel ein ringförmiges Federelement aus einem Verbundwerkstoff Metall-Kunststoff ist.

7. Rohrverbindung nach einem der Ansprüche 1, 2, 5 und 6,
**dadurch gekennzeichnet,**
**daß** im zylindrischen Bereich des Preßfittings außerhalb des Einwirkbereiches der Preßbacke auf der Innenseite eine ringförmige Ausnehmung (9) vorgesehen ist, in der das Mittel anordenbar ist.

8. Rohrverbindung nach Anspruch 7,
**dadurch gekennzeichnet,**
**daß** die Ausnehmung zwischen Ringwulst und Einwirkbereich der Preßbacke angeordnet ist.

9. Rohrverbindung nach Anspruch 7,
**dadurch gekennzeichnet,**
**daß** die Ausnehmung zwischen Einwirkbereich der Preßbacke und sickenförmiger Vertiefung (6) vorgesehen ist.

10. Rohrverbindung nach den Ansprüchen 7 - 9,
**dadurch gekennzeichnet,**
**daß** die Ausnehmung durch eine nach außen sich erstreckende Sicke (8) gebildet wird.

## Claims

1. Pipe joint, comprising a press fitting (1) which has at least one portion which has a bead-like cross-section and receives a sealing ring (3) and a region (4) which abuts thereon and has a cylindrical configuration, which region is provided at the end of the extension with a bead-shaped recess (6) which forms a limit stop, and comprising a pipe (5), the smooth end region of which, after insertion into the press fitting, comes to abut against the internal limit stop of the press fitting, in which pipe joint there is formed a non-detachable sealed pipe joint by means of a pressing tool, which encompasses the press fitting and has at least two pressure clamps, after closing of the pressure clamps, the pressure clamps acting, during the compression, both upon the annular bead including the sealing ring inserted therein and on the cylindrical region of the press fitting,
**characterised in that**
in the insertion region of the press fitting for the pipe (5), outwith the operational region of the pressure clamp, there is disposed a means (6; 10) which extensively prevents the axial return movement of the inserted pipe, the internal diameter of said means in the non-loaded state being smaller than the tolerance-wise smallest resultant external diameter of the inserted pipe.

2. Pipe joint according to claim 1,
**characterised in that**
the means is a ring (10) which is made of a flexible material.

3. Pipe joint according to claim 2,
**characterised in that**
the ring (10) has an internally extending projection (11).

4. Pipe joint according to claim 3,
**characterised in that**
the projection is slightly inclined in the insertion direction of the pipe.

5. Pipe joint according to claim 1,
**characterised in that**
the means is an annular spring element made of a metallic material.

6. Pipe joint according to claim 1,
**characterised in that**
the means is an annular spring element made of a metal-plastic composite material.

7. Pipe joint according to one of the claims 1, 2, 5 and 6,
**characterised in that**
in the cylindrical region of the press fitting outwith the operational region of the pressure clamp there is provided on the inside an annular recess (9) in which the means can be disposed.

8. Pipe joint according to claim 7,
**characterised in that**
the recess is disposed between the annular bead and the operational region of the pressure clamp.

9. Pipe joint according to claim 7,
**characterised in that**
the recess is provided between the operational region of the pressure clamp and the bead-shaped recess (6).

10. Pipe joint according to the claims 7 - 9,
**characterised in that**
the recess is formed by an externally extending bead (8).

## Revendications

1. Liaison pour tube, constituée d'un emmanchement à force (1), qui présente au moins un tronçon, présentant une forme de bourrelet en section transversale, recevant une bague d'étanchéité (3), et une zone (4), s'y raccordant, réalisée de façon cylindrique, qui est munie, à l'extrémité de son extension, d'un creux (6) en forme de moulure formant une butée, et d'un conduit (5), dont la zone d'extrémité lisse, après l'introduction dans l'emmanchement à force, vient en appui contre la butée interne de l'emmanchement à force, ladite liaison pour tube formant, au moyen d'un outil de pressage, comportant l'emmanchement à force et présentant au moins deux mâchoires de pressage, après la fermeture des mâchoires de pressage, une liaison pour tube étanche inamovible, les mâchoires de pressage agissant, pendant le pressage, aussi bien sur le bourrelet annulaire y compris la bague d'étanchéité s'y trouvant qu'également sur la zone cylindrique de l'emmanchement à force,
**caractérisée en ce que**, dans la zone d'introduction de l'emmanchement à force pour le conduit (5), à l'extérieur de la zone d'action des mâchoires de pressage, il est agencé un moyen (6 ; 10) empêchant largement le mouvement axial en arrière du conduit introduit, dont la largeur intérieure, dans l'état non chargé, est plus petite que le diamètre externe du conduit introduit, résultant, le plus petit, relativement aux tolérances.

2. Liaison pour tube selon la revendication 1,
**caractérisée en ce que** le moyen est une bague (10) constituée d'une matière élastique.

3. Liaison pour tube selon la revendication 2,
**caractérisée en ce que** la bague (10) présente une saillie (11) s'étendant vers l'intérieur.

4. Liaison pour tube selon la revendication 3,
**caractérisée en ce que** la saillie est légèrement inclinée dans la direction d'introduction du conduit.

5. Liaison pour tube selon la revendication 1,
**caractérisée en ce que** le moyen est un élément élastique annulaire en une matière métallique.

6. Liaison pour tube selon la revendication 1,
**caractérisée en ce que** le moyen est un élément élastique annulaire en une matière composite, métal-matière synthétique.

7. Liaison pour tube selon une des revendications 1, 2, 5 et 6,
**caractérisée en ce que**, dans la zone cylindrique de l'emmanchement à force à l'extérieur de la zone d'action des mâchoires de pressage sur la face interne, il est prévu un évidement annulaire (9), dans lequel le moyen peut être agencé.

8. Liaison pour tube selon la revendication 7,
**caractérisée en ce que** l'évidement est agencé entre le bourrelet annulaire et la zone d'action des mâchoires de pressage.

9. Liaison pour tube selon la revendication 7,
**caractérisée en ce que** l'évidement est prévu entre la zone d'action des mâchoires de pressage et le creux (6) en forme de moulure.

10. Liaison pour tube selon les revendications 7 - 9,
**caractérisée en ce que** l'évidement est formé par une moulure (8) s'étendant vers l'extérieur.
